# EUROPÄISCHE PATENTANMELDUNG

(11) **EP 1 445 810 A2**
(43) Veröffentlichungstag der Anmeldung: **11.08.2004**
(21) Anmeldenummer: 03028722.1
(22) Anmeldetag: 12.12.2003
(51) Int. Cl.: H01M 4/50

(54) **Elektrochemisches Element oder Zelle und Kathode hierfür**

(30) Priorität: 13.12.2002 ES 200202867
(71) Anmelder: CELAYA, EMPARANZA Y GALDOS S.A. (CEGASA), E-01013 Vitoria (Alava) (ES)
(72) Erfinder: Legasa, Francisco Javier Alday, Vitoria, Alava (ES); Ortiz, Fernando Perez, Vitoria, Alava (ES); Uribe-Echevarria, Igor Cantero, Sansebastian-Guipuzcoa (ES); Fattakova, Dina, Prague (CZ); Krtil, Petr, Rostoky u Prahy (CZ); Krysova, Hana, Prague (CZ)
(74) Vertreter: Feldkamp, Rainer, Dipl.-Ing.

(57) **Zusammenfassung**

Ein elektrochemisches Element oder Zelle sowie eine Kathode hierfür, das bzw. die eine Anode, einen Separator und eine aus Mangandioxid zusammengesetzte Kathode aufweist, wobei diese Kathode einen anorganischen kristallinen Zusatz von Wolframoxid, Zirkonverbindungen, Titandioxiden mit Rutilstruktur, Yttriumoxid, Ceroxid, Zeolit und Aluminiumsilikaten enthält, und dass zumindest einer dieser Zusätze einen Anteil im Bereich zwischen einem Zehntausendstel (0,0001) und einem Zehntel (10) Gewichtsprozent bezüglich der Kathodenmasse hat.

## Beschreibung

### Gebiet der Erfindung

Die vorliegende Erfindung bezieht sich auf ein elektrochemisches Element oder eine Zelle sowie auf eine Kathode hierfür, das bzw. die eine Anode, einen Separator und eine Kathode enthält, die aus Mangandioxid besteht.

### Stand der Technik

Diese Erfindung bezieht sich auf eine Kathode aus Mangandioxid mit verbesserter Entladekapazität, die aus einem elektrochemisch aktiven Mangandioxid und einem kristallinen Zusatz auf der Grundlage einer sauerstoffhaltigen Verbindung zusammengesetzt ist, sowie auf ihren Gebrauch in Primärzellen.

Die alkalischen Primärzellen werden üblicherweise durch eine Kathode aus Mangandioxid, eine Zinkanode, einen alkalischen Elektrolyten und einen für den Elektrolyten durchlässigen Separator gebildet.

Die Anode derartiger Zellen besteht üblicherweise aus einem Zinkpulver mit großer Oberfläche und einem Gelierungsmittel, das als Stabilisator dient. Außerdem kann die Anode auch durch ein warm- oder kaltgesintertes Pulver bei Vorliegen oder Fehlen von Plastifizierungsmitteln gebildet werden. Die früher verwendete Technik der Amalgierung wurde in neuerer Zeit zur Verbesserung der Umweltverträglichkeit der hergestellten Batterien aufgegeben.

Der in den meisten Fällen verwendete alkalische Elektrolyt ist eine wässrige Lösung von KOH. In einigen Fällen wurden andere Hydroxide, wie z. B. NaOH oder LiOH verwendet. Der Separator dient zur elektrischen Isolierung der Anode von der Kathode.

Das üblicherweise für die Kathode verwendete Material ist ein Gamma-Mangandioxid, das mit dem Elektrolyten getränkt ist. Zur Verringerung des Widerstandes des Kathoden-Materials werden unterschiedliche Arten von kohlenstoffhaltigen Teilchen, wie Grafit oder Flammruß oder Acetylen hinzugefügt. Die mechanischen Eigenschaften der Kathode werden üblicherweise durch Einfügung von Plastifizierungsmitteln verbessert.

In dem US-Patent 5 342 712 ist beschrieben, dass sich eine Verbesserung der Entladekapazität durch die Hinzufügung von Titandioxid zum Mangandioxid ergibt. Die Entladezeiten mit hohen oder mittleren Entladeströmen verbessern sich um 10 bis 15 Prozent. Diese Vergrößerung des Entladestroms ist von einer Erhöhung der Entladespannung der Zelle begleitet. Andererseits ruft die Hinzufügung von Titan ein ungünstigeres Verhalten bei der Verwendung von niedrigen Entladeströmen hervor. Die Wirkung des Zusatzes steht zu der Verbesserung der Beweglichkeit der Protonen in der Kathode in Beziehung, was eine Verringerung der zugehörigen Polarisation hervorruft. Gemäß diesem Patent ist dieser Effekt ausschließlich auf die Anatas-Struktur beschränkt und kann nicht auf den Fall der Hinzufügung von Rutil verallgemeinert werden.

In den US-Patenten 5 532 085, 5 569 564, 5 599 644, 5 895 734, 5 919 588 und 6 143 646 wird ein ähnlicher Effekt für die Hinzufügung anderer Titanverbindungen beschrieben. In allen Fällen beträgt die Verbesserung der Entladezeiten ungefähr 10 Prozent.

In vielen Fällen wird der Vorteil der erwähnten Zusätze teilweise durch die relativ hohen spezifischen Widerstände aufgehoben, die eine Vergrößerung des Innenwiderstandes der Batterie hervorrufen. Zur Verbesserung der Leitfähigkeit ist in dem WO-Patent 0079622 vorgeschlagen, die Zusätze, beispielsweise TiO₂ mit anderen Oxiden zu dotieren, wie z. B. Nb₂O₅. Dieser Prozess vergrößert jedoch die Materialkosten.

Andere anstelle der Titanverbindungen vorgeschlagene Zusätze sind CaW04, ZnMn₂O₄, SnO, Al₂O₃, Nb₂O₅ und SnO₂.

In dem US-Patent 6 348 259 ist ein besseres Entladeverhalten des Mangandioxids durch die Hinzufügung von Glimmer, Silikat, ZrO₂, Al₂O₃, SiO₂ und ZnO mit oder ohne Beschichtung der Teilchen beschrieben, wobei in diesem Fall die Entladezeit ungefähr um bis zu 30 Prozent verbessert wird. Es kann eine gewisse Verbesserung insoweit festgestellt werden, als im Gegensatz zu den vorher genannten Patenten die Hinzufügung von beschichtetem oder nicht beschichtetem Glimmer das Entladeverhalten auch bei niedrigen Entladeströmen verbessert.

### Erläuterung der Erfindung und der Vorteile

Das Ziel der vorliegenden Erfindung besteht in der Schaffung einer Mangandioxid-Elektrode, die bei ihrer Verwendung in galvanischen Zellen, elektrochemischen Zellen und Primärbatterien verlängerte Entladezeiten und eine verbesserte Ausgangsleistung ergibt.

Die folgende ausführliche Beschreibung verdeutlicht weitere andere Gesichtspunkte dieser Erfindung.

Das Ziel der Erfindung besteht in der Entwicklung einer Mangandioxid-Kathode, die kristalline anorganische Zusätze einschließt. Diese Zusätze sind Oxide, Silikate, Metalloxonitrate und bestimmte Metallwolframate. Die am Besten geeigneten Oxide sind das Titandioxid - mit Rutilstruktur; das Yttriumoxid und das Cer-Dioxid; die am Besten geeigneten Silikate sind verschiedene Aluminiumsilikate sowohl mit laminarer Struktur (Erden vom Typ von Kaolin oder Montmorillonit in einem Verhältnis von Si zu Al im Bereich zwischen 2 und 5) als auch mit Pentasilstruktur (Zeolithe vom Typ ZSN-5 mit einem Verhältnis von Si/Al im Bereich zwischen 20 und 600); von den Oxonitraten ist das Zirkon-Oxonitrat besonders wirksam; die am Besten geeigneten Wolframate sind die von Barium, Natrium, Strontium und Mangang. Wenn diese Zusätze (oder ihre Mischungen) mit Mangandioxid gemischt werden und eine Elektrode zubereitet wird, ergibt die Verwendung dieser Elektrode in einer Primärbatterie eine beträchtliche Verbesserung der Entladekapazität und der Entladespannung der Zelle.

In dieser Hinsicht kann ein beliebiger kommerzielle Lieferant der genannten Zusätze verwendet werden. Dennoch muss in Betracht gezogen werden, dass Zusätze mit einer bestimmten Kristallgröße oder Verteilung hiervon verwendet werden können, ohne dass die Eigenart des Prozesses wesentlich beeinflusst wird.

Die zur Verbesserung des Verhaltens des Mangandioxids eingefügten Zusätze können Kristallwasser einschließen oder Fremdionen enthalten und zu diesem Zweck hiermit dotiert sein.

Die fertigen Elektroden mit Mangandioxid, das mit den genannten Zusätzen gemischt ist, zeigen eine verlängerte Entladezeit, was einer größeren Entladekapazität entspricht. Die Zusätze weisen einen positiven Effekt auf, wenn sie in Mengen zugesetzt werden, die sich im Bereich von 0,001 Prozent bis 10 Prozent bezüglich der Kathodenzusammensetzung bewegen. Insbesondere ergibt die Modifikation der Mangandioxid-Elektroden mit den weiter oben aufgeführten Zusätzen eine Vergrößerung der Entladezeit (und der Kapazität) von bis zu 30 Prozent verglichen mit den gleichen Primärzellen, deren Kathoden nicht modifiziert wurden.

Die tatsächliche Menge des Zusatzes und seiner Eigenart hängt von der speziellen Anwendung der Primärzelle ab, die die Mangandioxid-Elektrode verwendet. Obwohl die Hinzufügung von Mengen, die bis zu 0,05 Prozent herunterreichen, einen messbaren Effekt auf die Entladezeit der im Handel erhältlichen Batterien hat, kann die Hinzufügung von etwa 10 Prozent zweckmäßig sein.

Entsprechend kann es zweckmäßig sein, die Art und die Menge des Zusatzes in Abhängigkeit von dem erwarteten Gebrauch der Elektrode zu ändern.

### Zeichnungen und Bezugziffern

Die Erfindung wird mit weiteren Einzelheiten in den Beispielen 1 und 2 beschrieben, die nachfolgend erläutert werden. Diese Beispiele dienen dem Ziel der Erläuterung und der Erleichterung des Verständnisses der vorliegenden Erfindung. Sie dienen jedoch nicht zur Beschränkung der tatsächlichen Erfindung.

### Die Ergebnisse der Entladeversuche sind in den folgenden Figuren gezeigt:

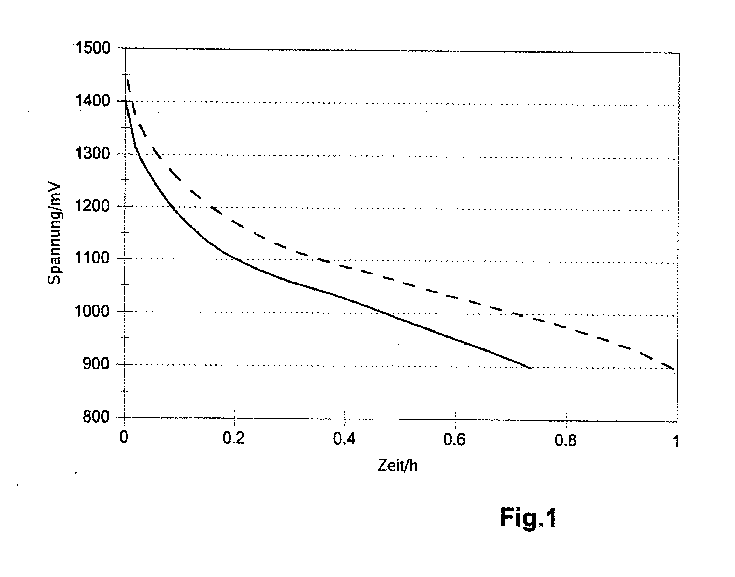

Die Figur 1 zeigt die Spannung der Batterie gegenüber der Entladezeit für die Zellen, die gemäß dem Beispiel 1 aufgebaut und getestet werden. Die durchgezogene Linie zeigt das Verhalten der üblichen Batterie, während die gestrichelte Linie die experimentelle Batterie zeigt, die den Zusatz gemäß der vorliegenden Erfindung enthält.

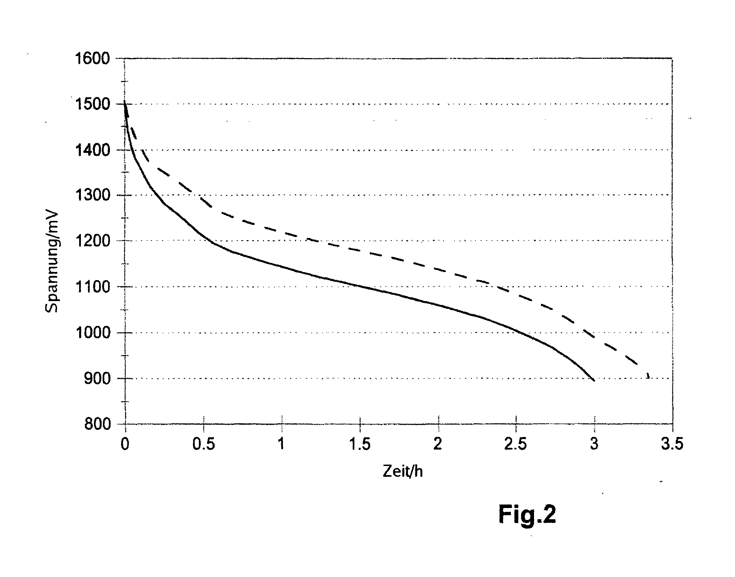

Die Figur 2 zeigt die Spannung der Batterie gegenüber der Entladezeit für die Batterien, die gemäß dem Beispiel 2 aufgebaut und getestet wurden. Die durchgezogene Linie zeigt das Verhalten der üblichen Batterie, und die gestrichelte Linie zeigt das Verhalten der experimentellen Batterie, die den Zusatz gemäß der vorliegenden Erfindung enthält.
Es ist schließlich verständlich, dass Änderungen der Einzelheiten, Materialien und Anordnungen der Teile, die zur Erläuterung der Eigenart der vorliegenden Erfindung beschrieben und erläutert wurden, vom Fachmann auf diesem Fachgebiet vorgenommen werden können, ohne dass der Grundgedanke und das Ziel dieser Erfindung verlassen wird.

### Erläuterung einer bevorzugten Ausführungsform

### Beispiel 1

Es wird eine übliche alkalische Primärzelle mit Zink/Mangandioxid der Größe LR mit den aktiven Anoden- und Kathoden-Materialien, einem Elektrolyt und einer Separator-Membran in üblicher Weise hergestellt. Das Anoden-Material befindet sich in einem gelierten Gemisch, das das Zinklegierungspulver und ein Gelierungsmittel einschließt. Der Separator ist ein nicht gewebtes Papier, das kommerziell zu seiner Verwendung in alkalischen Batterien mit einer Dicke von 0,125 mm hergestellt wird. Der Elektrolyt ist eine wässrige Lösung, die ungefähr 40 Gewichtsprozente KOH enthält.

Das aktive Kathoden-Material wird durch Mischen von 89 Gewichtsprozent von elektrolytischem Mangandioxid, von 6 Gewichtsprozenten Grafit und 5 Gewichtsprozenten einer Lösung von 9 N von KOH zubereitet.

Die experimentelle alkalische Zelle aus Zink/Mangandioxid der Größe LR6 wurde in identischer Form wie die übliche Zelle hergestellt, mit der Ausnahme, dass sie etwa 0,1 Gewichtsprozent an ZrOCl₂ enthält. Die Menge an elektrolytischem Mangandioxid wird in einer Menge verringert, die der gleichen Menge entspricht, in der das Zusatzmittel eingefügt wird, so dass sich das gleiche Gesamtgewicht für die üblichen Zellen und die experimentellen Zellen ergibt.

Sowohl die Normzelle als auch die experimentelle Zelle werden mit einem konstanten Strom von 1 A entladen. Die experimentelle Zelle zeigt eine beträchtliche Verbesserung des Entladeverhaltens sowohl hinsichtlich der Kapazität als auch der Entladespannung auf. Die experimentelle Zelle weist ein Entladeverhalten auf, das im Vergleich zu dem, das mit der Normzelle erzielt wurde, um 25 bis 30% günstiger ist.

### Beispiel 2

Es wird eine übliche alkalische Primärzelle mit Zink/Mangandioxid der Größe LR6 mit den aktiven Anoden- und Kathoden-Materialien, dem Elektrolyt und einer üblichen Separator-Membran hergestellt. Das Anoden-Material wird in einer gelierten Mischung gebildet, die das Zinklegierungspulver und ein Geliermittel einschließt. Der Separator ist ein nicht gewebtes Papier, das kommerziell für seine Verwendung in alkalischen Zellen mit einer Dicke von 0,125 mm hergestellt wird. Der Elektrolyt war eine wässrige Lösung, die ungefähr 40 Gewichtsprozente an KOH enthielt.

Das aktive Kathoden-Material wurde durch Mischen von 89 Gewichtsprozent von elektrolytischem Mangandioxid, von 6 Gewichtsprozenten Grafit und 5 Gewichtsprozenten einer Lösung von 9N aus KOH zubereitet.

Die experimentelle alkalische Zelle aus Zink/Mangandioxid der Größe LR6 wurde in identischer Weise zu der Normzelle hergestellt, mit der Ausnahme, dass sie 0,1 Gewichtsprozente an ZrOCl₂ enthielt. Die Menge des elektrolytischen Mangandioxids wurde in einer Menge entsprechend der gleichen Menge verringert, die an Zusatz beigefügt wurde, so dass das gleiche Gesamtgewicht für die Normzelle und die experimentelle Zelle erzielt wurde.

Sowohl die Normzelle als auch die experimentelle Zelle wurden mit einem konstanten Strom über einen Widerstand von 2,2 Ohm entladen. Die erzielte Verbesserung der Entladekapazität ist ungefähr 10 Prozent.

## Patentansprüche

1. Elektrochemisches Element oder Zelle, **dadurch gekennzeichnet, dass** sie eine Anode, einen Separator und eine Kathode enthält, die aus Mangandioxid zusammengesetzt ist, dass diese Kathode einen anorganischen kristallinen Zusatz von Wolframoxid, Zirkonverbindungen, Titandioxiden mit Rutilstruktur, Yttriumoxid, Ceroxid, Zeolit und Aluminiumsilikaten enthält, und dass zumindest einer dieser Zusätze einen Anteil im Bereich zwischen einem Zehntausendstel (0,0001) und einem Zehntel (10) Gewichtsprozent bezüglich der Kathodenmasse hat.

2. Elektrochemisches Element oder Zelle nach dem Anspruch 1, **dadurch gekennzeichnet, dass** die kristallinen anorganischen Zusätze, die in die Kathode eingefügt sind, aus Wolframoxiden, insbesondere Bariumwolframat (BaW04), Natriumwolframat (Na₂WO₄), Strontiumwolframat (SrWO₄) und Mangan (II) - Wolframat (MnWO₄) bestehen.

3. Elektrochemisches Element oder Zelle nach dem Anspruch 1, **dadurch gekennzeichnet, dass** die kristallinen anorganischen Zusätze, die in die Kathode eingefügt sind, aus Zirkonverbindungen, insbesondere Zirkonoxinitrat (ZrO(NO₃)₂) und Zirkonoxichlorat (ZrOCl₂) bestehen.

4. Elektrochemisches Element oder Zelle nach Anspruch 1, **dadurch gekennzeichnet, dass** die kristallinen anorganischen Zusätze, die in die Kathode eingefügt sind, aus Titandioxid (TiO₂) mit Rutilstruktur bestehen.

5. Elektrochemisches Element oder Zelle nach Anspruch 1, **dadurch gekennzeichnet, dass** die kristallinen anorganischen Zusätze, die in die Kathode eingefügt sind, aus Yttriumoxid (Y2O₃) oder Cer-Dioxid (CeO₂) bestehen.

6. Elektrochemisches Element oder Zelle nach Anspruch 1, **dadurch gekennzeichnet, dass** die kristallinen anorganischen Zusätze, die in die Kathode eingefügt sind, aus Zeolithen, Aluminiumsilikat-Erden oder Mischungen der beiden bestehen.

7. Elektrochemisches Element oder Zelle nach Anspruch 1 und 6, **dadurch gekennzeichnet, dass** die genannten Zeolithen, die in die Kathode eingefügt sind, eine ZSM-5-Pentasil-Struktur mit einem Verhältnis von Si/Al im Bereich zwischen 20 und 600 aufweisen.

8. Elektrochemisches Element oder Zelle nach Anspruch 1 und 6, **dadurch gekennzeichnet, dass** die genannten Aluminiumsilikat-Erden, die in die Kathode eingefügt sind, vom Kaolinit- oder Montmorillonit-Typ mit einem Verhältnis von Si/Al im Bereich zwischen 2 und 5 sind.

9. Elektrochemisches Element oder Zelle nach einem oder mehreren der Ansprüche 1 bis 8, **dadurch gekennzeichnet, dass** in der Kathode der Gesamtanteil der kristallinen anorganischen Zusätze durch einen oder mehrere der angegebenen kristallinen anorganischen Zusätze zusammengesetzt ist.

10. Elektrochemisches Element oder Zelle nach einem oder mehreren der Ansprüche 1 bis 9, **dadurch gekennzeichnet, dass** die genannten kristallinen anorganischen Zusätze Kristallwasser enthalten können.

11. Elektrochemisches Element oder Zelle nach einem oder mehreren der Ansprüche 1 bis 10, **dadurch gekennzeichnet, dass** die genannten anorganischen Zusätze Fremdionen enthalten können und hierzu mit diesen dotiert sind.

12. Elektrochemisches Element oder Zelle nach einem oder mehreren der Ansprüche 1 bis 11, **dadurch gekennzeichnet, dass** das Element oder die Zelle alkalisch ist.

13. Elektrochemisches Element oder Zelle nach einem oder mehreren der Ansprüche 1 bis 12, **dadurch gekennzeichnet, dass** die Anode Zinkteilchen einschließt.

14. Elektrochemisches Element oder Zelle nach einem oder mehreren der Ansprüche 1 bis 13, **dadurch gekennzeichnet, dass** es bzw. sie außerdem eine Elektrolytlösung enthält.

15. Kathode für ein elektrochemisches Element oder eine Zelle nach dem Anspruch 1, **dadurch gekennzeichnet, dass** dies eine Kathode ist, die aus Mangandioxid zusammengesetzt ist und einen anorganischen kristallinen Zusatz von Wolframoxid, Zirkonverbindungen, Titandioxiden mit Rutilstruktur, Yttriumoxid, Cer-Oxid, Zeolith und Aluminiumsilikaten enthält, und dass zumindest einer dieser Zusätze in einem Anteil im Bereich zwischen einem Zehntausendstel (0,001) und 10 Gewichtsprozenten bezogen auf die Kathodenmasse vorliegt.

16. Kathode für ein elektrochemisches Element oder eine Zelle nach Anspruch 1 und 15, **dadurch gekennzeichnet, dass** dies eine Kathode ist, bei der die in ihrem Inneren enthaltenen Zusätze aus Wolframoxid, insbesondere Bariumwolframat (BaWO₄), Natriumwolframat (Na₂WO₄) und Strontiumwolframat (SrWO₄) und Mangan (II) Wolframat (MnWO₄) bestehen.

17. Kathode für ein elektrochemisches Element oder eine Zelle nach den Ansprüchen 1 und 15, **dadurch gekennzeichnet, dass** dies eine Kathode ist, deren in ihrem Inneren eingeschlossenen Zusätze aus Zirkonverbindungen, aus Zirkonoxinitrat (ZrO(NO₃)₂) und Zirkonoxichlorat (ZrOCl₂) bestehen.

18. Kathode für ein elektrochemisches Element oder eine Zelle nach den Ansprüchen 1 und 15, **dadurch gekennzeichnet, dass** dies eine Kathode ist, deren in ihrem Inneren eingeschlossenen Zusätze aus Titandioxid (TiO₂) mit Rutilstruktur bestehen.

19. Kathode für ein elektrochemisches Element oder eine Zelle nach Anspruch 1 und 15, **dadurch gekennzeichnet, dass** dies eine Kathode ist, deren in ihrem Inneren eingeschlossenen Zusätze aus Yttriumoxid (Y₂O₃) oder Cer-Oxid (CeO₂) bestehen.

20. Kathode für ein elektrochemisches Element oder eine Zelle nach den Ansprüchen 1 und 15, **dadurch gekennzeichnet, dass** dies eine Kathode ist, deren in ihrem Inneren eingeschlossenen Zusätze aus Zeolithen, Aluminiumsilikat-Erden oder Mischungen der beiden bestehen.

21. Kathode für ein elektrochemisches Element oder eine Zelle nach den Ansprüchen 1, 15 und 20, **dadurch gekennzeichnet, dass** dies eine Kathode ist, deren Zeolithen, die in ihrem Inneren eingefügt sind, eine ZSM-5-Pentasil-Struktur mit einem Verhältnis von Si/Al in dem Bereich zwischen 20 und 600 aufweisen.

22. Kathode für ein elektrochemisches Element oder eine Zelle nach den Ansprüchen 1 15 und 20, **dadurch gekennzeichnet, dass** dies eine Kathode ist, deren Aluminiumsilikat-Erden, die in ihrem Inneren eingeschlossen sind, vom Kaolinit- oder Montmorillonit-Typ mit einem Verhältnis von Si/Al im Bereich zwischen 2 und 5 sind.

23. Kathode für ein elektrochemisches Element oder eine Zelle nach den Ansprüchen 1 und 15 bis 22, **dadurch gekennzeichnet, dass** in der Kathode der Gesamtanteil der kristallinen anorganischen Zusätze durch eine oder mehrere der angegebenen kristallinen anorganischen Zusätze zusammengesetzt ist.

24. Kathode für ein elektrochemisches Element oder eine Zelle nach den Ansprüchen 1 und 15 bis 23, **dadurch gekennzeichnet, dass** die genannten kristallinen anorganischen Zusätze Kristallwasser enthalten können.

25. Kathode für ein elektrochemisches Element oder eine Zelle nach den Ansprüchen 1 und 15 bis 24, **dadurch gekennzeichnet, dass** dies eine Kathode ist, deren in ihrem Inneren eingeschlossenen Zusätze Fremdionen enthalten können und hierzu mit diesen dotiert sind.

26. Kathode für ein elektrochemisches Element oder eine Zelle, **dadurch gekennzeichnet, dass** dies ein galvanisches Element ist, das eine Kathode aus Mangandioxid nach einem oder mehreren der Ansprüche 15 bis 25 einschließt.
